# EUROPEAN PATENT SPECIFICATION

(11) **EP 3 473 841 B1**
(45) Date of publication and mention of the grant of the patent: **08.09.2021**
(21) Application number: 18196213.5
(22) Date of filing: 24.09.2018
(51) Int. Cl.: F02K 1/46, F01D 25/30

(54) **TURBOFAN ENGINE**
MANTELSTROM-TRIEBWERK
MOTEUR À DOUBLE FLUX

(30) Priority: 19.10.2017 GB 201717153
(43) Date of publication of application: 24.04.2019
(73) Proprietor: Rolls-Royce plc, London N1 9FX (GB)
(72) Inventor: Wells, John, Derby, Derbyshire DE24 8BJ (GB); Mosley, Christopher, Derby, Derbyshire DE24 8BJ (GB); Grech, Nicholas, Derby, Derbyshire DE24 8BJ (GB)
(74) Representative: Rolls-Royce plc

(56) References cited:
- EP-A2- 1 004 759
- FR-A1- 2 923 270
- US-A1- 2008 271 431

## Description

### BACKGROUND

Examples of turbofan engines are described herein.

In a turbofan engine, an engine core bounded by a core cowling is positioned inwardly of a nacelle, defining a bypass duct between the engine core and the internal surface of the nacelle. The aft (downstream) end of the nacelle defines a bypass duct exit plane of the bypass duct, the bypass duct exit plane being generally normal to the longitudinal axis of the engine. In operation of the engine, exhaust from the engine core is expelled through a core exhaust of the core cowling. Bypass air passes through the bypass duct, and is expelled through the bypass duct exit plane as bypass exhaust flow which provides the majority of the engine's thrust. Typically the engine core has an afterbody, i.e. the engine core has a portion which extends aft (downstream) of the bypass duct exit plane. Any disruption, obstruction or impediment to the bypass exhaust flow has a negative impact on overall engine performance, for example a negative impact on specific fuel consumption.

Published French patent application 2923 270 discloses a mixed-jets turbofan engine having a core cowling which has an exit ventilation nozzle downstream of the engine's bypass duct exit plane.

### BRIEF SUMMARY

According to the invention, a turbofan engine comprises a nacelle and an engine core having a core cowling and wherein
(i) the internal surface of the nacelle and the external surface of the core cowling define a bypass duct having an exhaust end defining a bypass duct exit plane generally normal to the longitudinal axis of the engine;
(ii) the core cowling extends aft of the bypass duct exit plane and has an exhaust end defining a core exit plane generally normal to the longitudinal axis of the engine;
(iii) the core cowling has an annular or partly-annular exit ventilation nozzle located aft of a first longitudinal position and fore of a second longitudinal position, the first and second longitudinal positions being respectively fore of and either aft of or coincident with the bypass duct exit plane and the core cowling otherwise being free of exit ventilation nozzles fore of the second longitudinal position;
and wherein in a plane which includes the longitudinal axis of the engine:
(iv) a first straight line passing through a first point on the internal surface of the nacelle in the bypass duct exit plane and a second point on the external surface of the core cowling at the first longitudinal position is normal to the external surface of the core cowling; and
(v) a second straight line passing through the first point and a third point on the external surface of the core cowling at the second longitudinal position makes an angle with the bypass duct exit plane which is less than or equal to 20% of the angle between the bypass duct exit plane and a third straight line joining the first point and a fourth point on the external surface of the core cowling in the core exit plane.

The second longitudinal position may be such that the angle between the second straight line and the bypass duct exit plane is less than or equal to 15% of the angle between the third straight line and the bypass duct exit plane.

The second longitudinal position may be such that the angle between the second straight line and the bypass duct exit plane is less than or equal to 10% of the angle between the third straight line and the bypass duct exit plane.

The core cowling may have a second annular or partly annular exit ventilation nozzle located aft of the second longitudinal position.

The annular or partly-annular exit ventilation nozzle may be louvered.

Except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION OF THE DRAWINGS

Examples are described below with reference to the accompanying drawings in which:
- Figure 1: is a longitudinal section through a known turbofan engine, the section including the longitudinal axis (rotation axis) of the engine;
- Figure 2: is a partial longitudinal section of the engine of Figure 1;
- Figure 3: is a partial longitudinal section of an example turbofan engine; and
- Figure 4: is a partial longitudinal section of another example turbofan engine.

### DETAILED DESCRIPTION

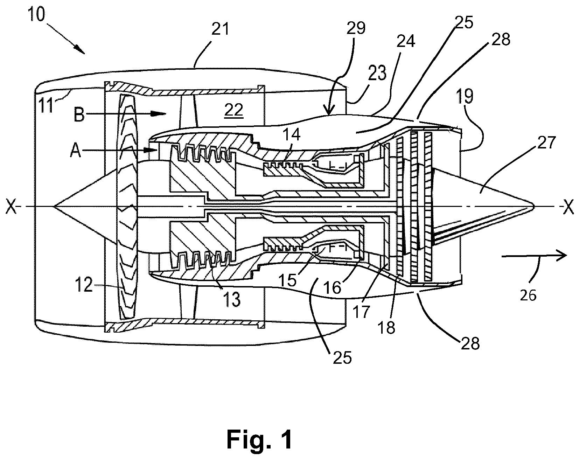

Referring to Figure 1, a known turbofan engine 10 has a longitudinal (rotational) axis X and a nacelle 21 having an interior surface 11. The nacelle 21 surrounds an engine core 29 which is bounded by a core cowling 24. The interior surface 11 of the nacelle 21 and the core cowling 24 together define a bypass duct 22 which terminates in a bypass duct exit plane 23. The interior surface of the nacelle 11 forms the outer wall of the bypass duct 22. The engine core 29 extends aft (downstream) of the bypass duct exit plane 23 so that the engine core 29 has an afterbody portion. The engine core 29 and the core cowling 24 have a core exit plane 19. The core cowling 24 may not form a complete annulus around the engine core because it may be interrupted over a limited angular range by a pylon structure for attaching the engine to an aircraft (or by a space for accommodating such a structure), depending on how the engine is, or is to be, attached to an aircraft. The engine 10 has a propulsive fan 12, intermediate 13 and high 14 pressure compressors, combustion equipment 15, and high 16, intermediate 17 and low 18 pressure turbines. A centre-body 27 extends through the core exit plane 19. The engine core 29 includes a core rear fire zone 25 disposed outwardly of the compressors 13, 14, combustion equipment 15 and turbines 16, 17, 18. The core cowling 24 of the engine core 29 has an annular or partly-annular exit ventilation nozzle 28 located near or towards the core exit plane 19, aft (downstream) of the bypass duct exit plane 23. The nozzle 28 is a ventilation outlet (exit) for the core rear fire zone 25 of the engine 10.

In operation of the engine 10, air and combustion products pass through the engine 10 in a general direction indicated by 26. Air entering the nacelle 21 at the front of the engine is accelerated by the fan 12. Aft of the fan 12 this air becomes divided into two air flows: a first airflow A into the intermediate pressure compressor 13 and a second airflow B which passes through the bypass duct 22 in a general direction indicated by 26. The intermediate pressure compressor 13 compresses the airflow directed into it before delivering that air to the high pressure compressor 14 where further compression takes place. Air flow B is output from the bypass duct 22 at the bypass duct exit plane 23 and provides the majority of the engine's thrust.

Compressed air output from the high-pressure compressor 14 is directed into the combustion equipment 15 where it is mixed with fuel and the resulting mixture combusted. The resulting hot combustion products then expand through, and thereby drive the high, intermediate and low-pressure turbines 16, 17, 18 respectively before being exhausted through the exit plane 19 of the engine core 29 to provide further thrust. The high, intermediate and low pressure turbines 16, 17, 18 drive respectively the high pressure compressor 14, intermediate pressure compressor 13 and fan 12, each by means of a respective interconnecting shaft which has a rotation axis coincident with the longitudinal axis X of the engine 10. One or more portions of airflow B are diverted from the bypass duct 22 at one or more respective longitudinal positions fore (upstream) of the combustion equipment 15 into the core rear fire zone 25 in order to purge the zone 25. Air is output from the core rear fire zone 25 via the annular or partly-annular exit ventilation nozzle 28.

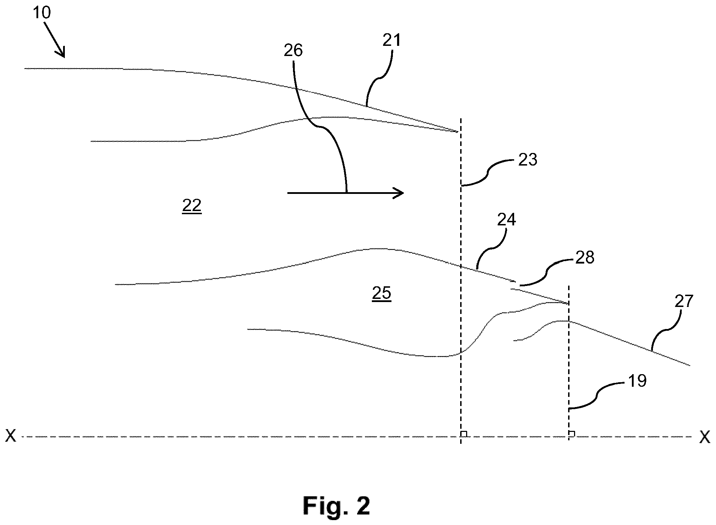

Figure 2 is a partial longitudinal section of the engine 10, the section including the longitudinal (rotation) axis X of the engine 10 and showing parts of the engine 10 on a single lateral side of the axis X only. Referring additionally now to Figure 2, at the longitudinal position of the annular or partly-annular exit ventilation nozzle 28 the radius of the core cowling 24 reduces abruptly with increasing longitudinal position along the axis X in the direction 26, forming an annular or partly-annular step or radial discontinuity in the core cowling 24. The nozzle 28 is an annular or partly-annular gap which may extend 360° around the axis X or less than 360°. In operation of the engine 10, air is diverted from the bypass duct 22 into the core rear fire zone 25 of the engine core 29 in order to purge or exhaust the core rear fire zone 25. The nozzle 28 provides an exhaust path for air to leave the core rear fire zone 25 towards the aft (downstream) end of the zone 25.

Other turbofan engines to which the present disclosure may be applied may have an alternative number of interconnecting shafts (e.g. two) and/or an alternative number of compressors and/or turbines. Further, an engine may comprise a gearbox provided in the drive train from a turbine to a compressor and/or fan. The precise function of the annular or partly-annular exit ventilation nozzle may vary in other turbofan engines to which the present disclosure may be applied; it is assumed only that air or other gas exits the engine core of an engine via such a nozzle during its operation.

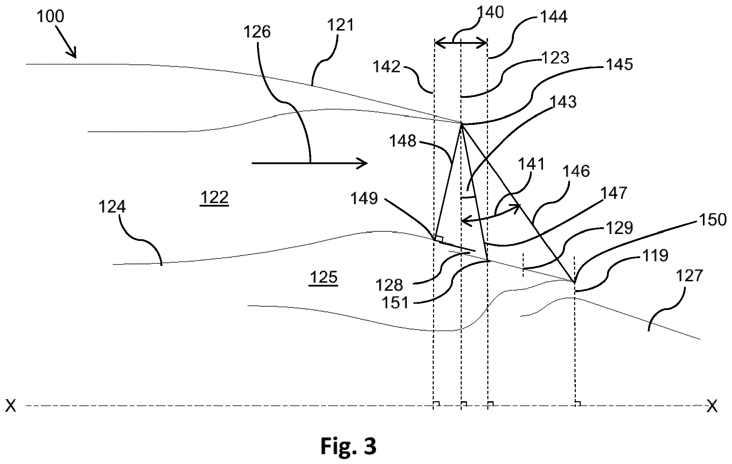

Figure 3 shows a partial longitudinal section of an example turbofan engine 100, the section including the longitudinal (rotation) axis X of the engine 100 and showing parts of the engine 100 on a single lateral side of the axis X only. Parts of the engine 100 are labelled with reference numerals differing by 100 from those labelling corresponding parts of the engine 10 of Figures 1 and 2. The engine 100 has an annular or partly-annular exit ventilation nozzle 128 for ventilation of a core rear fire zone 125, the nozzle 128 being aft (downstream) of a first longitudinal position 142 and fore (upstream) of a second longitudinal position 144, the first 142 and second 144 longitudinal positions being respectively fore (upstream) and aft (downstream) of the bypass duct exit plane 123. A conventional longitudinal position for an annular or partly-annular exit ventilation nozzle for core rear first zone 125 is indicated by 129, this position being aft of the second longitudinal position 144. A first straight line 148 which passes through a first point 145 on the outer wall of the bypass duct in the bypass duct exit plane 123 and a second point 149 on the exterior of the core cowling 124 at the first longitudinal position 142 is normal to the exterior surface of the core cowling 124; this defines the first longitudinal position 142. A second straight line 147 passing through the first point 145 and a third point 151 on the exterior of the core cowling 124 at the second longitudinal position 144 makes an angle 143 with the bypass duct exit plane 123. A third straight line 146 which passes through the first point 145 and a fourth point 150 on the core cowling 124 and in the exit plane 119 of the core cowling 124 makes an angle 141 with the bypass duct exit plane 123. The value of angle 141 depends on both the longitudinal separation (i.e. the separation in direction 126) of the exit planes 119, 123 and on the separation of the points 145, 150 in the direction normal to the axis X. The value of the angle 143 is 20% of the value of the angle 141; this defines the second longitudinal position 144. Locating the nozzle 128 between the first 142 and second 144 longitudinal positions produces a beneficial effect on the bypass exhaust flow output from bypass duct 122 during operation of the engine 100, improving the specific fuel consumption of the engine 100 compared to that of the engine 10 which has a single annular or partly-annular exit ventilation nozzle 28 located aft of the second longitudinal position as defined above in relation to the engine 100. Air exiting the core rear fire zone 125 via the nozzle 128 in operation of the engine 100 produces a layer of air adjacent the exterior of the core cowling 128 downstream of the nozzle 128; this layer of air reduces drag on the bypass exhaust flow produced by the exterior surface of the core cowling. The further upstream the nozzle 138 is located, the less is the drag on the bypass exhaust flow caused by the core cowling 124.

In alternative examples, the value of the angle 143 is a smaller percentage of the value of the angle 141, for example 18%, 16%, 14%, 12%, 10%, 8%, 6%, 4% or 2%, or any percentage intermediate any two of these values. In other examples, the value of angle 143 is zero percent of the value of the angle 141, i.e. the nozzle 128 is located between the first longitudinal position and the bypass duct exit plane (in such a case the second longitudinal position is coincident with the bypass duct exit plane).

In alternative examples, not part of the claimed invention, nozzle 128 is located either at the first longitudinal position 142 or at the second longitudinal position 144, rather than at a position between the first and second longitudinal positions.

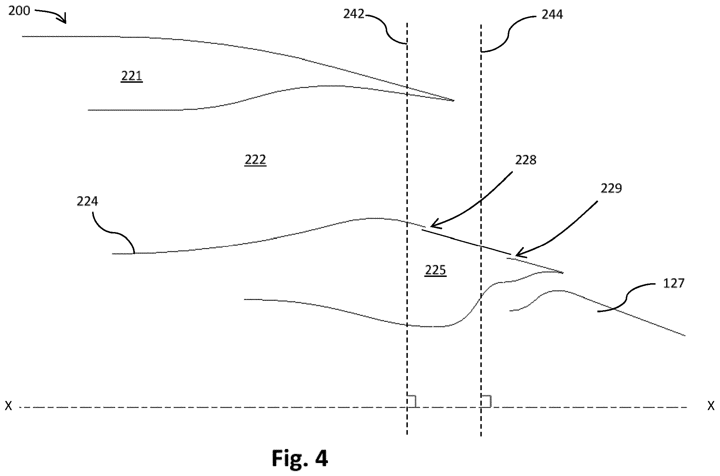

Figure 4 shows a partial longitudinal section of a further example turbofan engine 200 which is similar to the engine 100 of Figure 3; parts of the engine 200 are labelled using reference numerals differing by 100 from those labelling corresponding parts in Figure 3. The engine 200 has a first annular or partly-annular exit ventilation nozzle 228 located between first 242 and second 244 longitudinal positions, which are defined above in relation to the engine 100. The engine 200 has a second annular or partly-annular exit ventilation nozzle 229 located aft (downstream) of the second longitudinal position 244. The annular or partly-annular exit ventilation nozzle 228 has a beneficial effect on the bypass exhaust flow output from bypass duct 222, such that the engine 200 has a lower specific fuel consumption than that of an equivalent engine having a single annular or partly-annular exit ventilation nozzle located aft of the second longitudinal position.

In some embodiments the bypass duct may terminate at an axial position which depends on azimuthal position with respect to the longitudinal (rotation) axis of the engine. (An example of an engine having such a bypass duct is the Rolls-Royce® Trent® 1000.) In such an embodiment, the bypass duct exit plane is that plane, normal to the axis of the engine, furthest downstream at which the outer wall of the bypass duct is unbroken in azimuth.

The invention is defined in the appended claims.

## Claims

1. A turbofan engine (100; 200) comprising a nacelle (121; 221) and an engine core having a core cowling (124; 224) and wherein
(i) the internal surface of the nacelle and the external surface of the core cowling define a bypass duct having an exhaust end defining a bypass duct exit plane (123; 223) generally normal to the longitudinal axis (X) of the engine;
(ii) the core cowling extends aft of the bypass duct exit plane and has an exhaust end defining a core exit plane (119; 219) generally normal to the longitudinal axis of the engine;
(iii) the core cowling has an annular or partly-annular exit ventilation nozzle (128; 228) located aft of a first longitudinal position and fore of a second longitudinal position, the first and second longitudinal positions being respectively fore of and either aft of or coincident with the bypass duct exit plane and the core cowling otherwise being free of exit ventilation nozzles fore of the second longitudinal position;
and wherein in a plane which includes the longitudinal axis of the engine:
(iv) a first straight line (148) passing through a first point (145) on the internal surface of the nacelle in the bypass duct exit plane and a second point (149) on the external surface of the core cowling at the first longitudinal position is normal to the external surface of the core cowling; and
(v) a second straight line (147) passing through the first point and a third point (151) on the external surface of the core cowling at the second longitudinal position makes an angle with the bypass duct exit plane which is less than or equal to 20% of the angle between the bypass duct exit plane and a third straight line (146) joining the first point and a fourth point (150) on the external surface of the core cowling in the core exit plane.

2. A turbofan engine according to claim 1 wherein second longitudinal position is such that the angle between the second straight line and the bypass duct exit plane is less than or equal to 15% of the angle between the third straight line and the bypass duct exit plane.

3. A turbofan engine according to claim 1 or claim 2 wherein second longitudinal position is such that the angle between the second straight line and the bypass duct exit plane is less than or equal to 10% of the angle between the third straight line and the bypass duct exit plane.

4. A turbofan engine according to any preceding claim wherein the core cowling has a second annular or partly annular exit ventilation nozzle (229) located aft of the second longitudinal position.

5. A turbofan engine according to any preceding claim wherein the annular or partly-annular exit ventilation nozzle is louvered.

## Patentansprüche

1. Turbofan-Triebwerk (100; 200), umfassend eine Gondel (121; 221) und einem Triebwerkskern mit einer Kernverkleidung (124; 224) und wobei
(i) die Innenfläche der Gondel und die Außenfläche der Kernverkleidung einen Bypasskanal mit einem Auslassende definieren, das eine Bypasskanal-Austrittsebene (123; 223) im Allgemeinen senkrecht zur Längsachse (X) des Triebwerks definiert;
(ii) die Kernverkleidung hinter der Bypasskanal-Austrittsebene verläuft und ein Auslassende aufweist, das eine Kernaustrittsebene (119; 219) im Allgemeinen senkrecht zur Längsachse des Triebwerks definiert;
(iii) die Kernverkleidung eine ringförmige oder teilweise ringförmige Austrittsbelüftungsdüse (128; 228) aufweist, die sich hinter einer ersten Längsposition und vor einer zweiten Längsposition befindet, wobei die erste und zweite Längsposition jeweils vor und entweder hinter oder zusammenfallend mit der Bypasskanal-Austrittsebene liegen und die Kernverkleidung ansonsten frei von Austrittsbelüftungsdüsen vor der zweiten Längsposition ist;
und wobei in einer Ebene, die die Längsachse des Triebwerks umfasst:
(iv) eine erste gerade Linie (148), die durch einen ersten Punkt (145) auf der Innenfläche der Gondel in der Bypasskanal-Austrittsebene und einen zweiten Punkt (149) auf der Außenfläche der Kernverkleidung an der ersten Längsposition verläuft, senkrecht zur Außenfläche der Kernverkleidung ist; und
(v) eine zweite gerade Linie (147), die durch den ersten Punkt und einen dritten Punkt (151) auf der Außenfläche der Kernverkleidung an der zweiten Längsposition verläuft, einen Winkel mit der Bypasskanal-Austrittsebene bildet, der kleiner oder gleich 20 % des Winkels zwischen der Bypasskanal-Austrittsebene und einer dritten geraden Linie (146) ist, die den ersten Punkt und einen vierten Punkt (150) auf der Außenfläche der Kernverkleidung in der Kernaustrittsebene verbindet.

2. Turbofan-Triebwerk nach Anspruch 1, wobei die zweite Längsposition so ist, dass der Winkel zwischen der zweiten geraden Linie und der Bypasskanal-Austrittsebene kleiner oder gleich 15% des Winkels zwischen der dritten geraden Linie und der Bypasskanal-Austrittsebene ist.

3. Turbofan-Triebwerk nach Anspruch 1 oder Anspruch 2, wobei die zweite Längsposition so ist, dass der Winkel zwischen der zweiten geraden Linie und der Bypasskanal-Austrittsebene kleiner oder gleich 10 % des Winkels zwischen der dritten geraden Linie und dem Bypasskanal-Austrittsebene ist.

4. Turbofan-Triebwerk nach einem der vorhergehenden Ansprüche, wobei die Kernverkleidung eine zweite ringförmige oder teilweise ringförmige Austrittsbelüftungsdüse (229) aufweist, die sich hinter der zweiten Längsposition befindet.

5. Turbofan-Triebwerk nach einem der vorhergehenden Ansprüche, bei dem die ringförmige oder teilweise ringförmige Austrittsbelüftungsdüse mit Luftschlitzen versehen ist.

## Revendications

1. Moteur de turboréacteur à double flux (100 ; 200) comprenant une nacelle (121 ; 221) et un noyau de moteur possédant un capot de noyau (124 ; 224) et
(i) ladite surface interne de la nacelle et ladite surface externe du capot de noyau définissant un conduit de dérivation possédant une extrémité d'échappement définissant un plan de sortie de conduit de dérivation (123 ; 223) globalement normal à l'axe longitudinal (X) du moteur ;
(ii) ledit capot de noyau s'étendant à l'arrière du plan de sortie de conduit de dérivation et possédant une extrémité d'échappement définissant un plan de sortie de noyau (119 ; 219) globalement normal à l'axe longitudinal du moteur ;
(iii) le capot de noyau comportant une tuyère de ventilation de sortie annulaire ou partiellement annulaire (128 ; 228) située en arrière d'une première position longitudinale et en avant d'une seconde position longitudinale, les première et seconde positions longitudinales étant respectivement en avant et soit en arrière soit concomitantes avec le plan de sortie de conduit de dérivation et le capot de noyau étant par ailleurs dépourvus de tuyères de ventilation de sortie avant la seconde position longitudinale ;
et dans un plan qui comprend l'axe longitudinal du moteur :
(iv) une première droite (148) passant par un premier point (145) sur la surface interne de la nacelle dans le plan de sortie de conduit de dérivation et un deuxième point (149) sur la surface externe du capot de noyau au niveau de la première position longitudinale étant normale à la surface externe du capot de noyau ; et
(v) une deuxième droite (147) passant par le premier point et un troisième point (151) sur la surface externe du capot de noyau au niveau de la seconde position longitudinale faisant un angle avec le plan de sortie de conduit de dérivation inférieur ou égal à 20 % de l'angle entre le plan de sortie de conduit de dérivation et une troisième droite (146) joignant le premier point et un quatrième point (150) sur la surface externe du capot de noyau dans le plan de sortie de noyau.

2. Moteur de turboréacteur à double flux selon la revendication 1, ladite seconde position longitudinale étant telle que l'angle entre la deuxième droite et le plan de sortie de conduit de dérivation est inférieur ou égal à 15 % de l'angle entre la troisième droite et le plan de sortie de conduit de dérivation.

3. Moteur de turboréacteur à double flux selon la revendication 1 ou la revendication 2, ladite seconde position longitudinale étant telle que l'angle entre la deuxième droite et le plan de sortie de conduit de dérivation est inférieur ou égal à 10 % de l'angle entre la troisième droite et le plan de sortie de conduit de dérivation.

4. Moteur de turboréacteur à double flux selon une quelconque revendication précédente, ledit capot de noyau possédant une seconde tuyère de ventilation de sortie annulaire ou partiellement annulaire (229) située à l'arrière de la seconde position longitudinale.

5. Moteur de turboréacteur à double flux selon une quelconque revendication précédente, ladite tuyère de ventilation de sortie annulaire ou partiellement annulaire étant à persienne.
